# EUROPÄISCHE PATENTSCHRIFT

(11) **EP 1 054 528 B1**
(45) Veröffentlichungstag und Bekanntmachung des Hinweises auf die Patenterteilung: **09.03.2005**
(21) Anmeldenummer: 00440096.6
(22) Anmeldetag: 07.04.2000
(51) Int. Cl.: H04L 12/24

(54) **Verfahren zum Ausführen einer Anforderung einer Netzwerkverwaltungseinrichtung**
Method for processing a request of a network management unit
Méthode pour traiter une demande des appareillages de gestion de réseau

(30) Priorität: 19.05.1999 DE 19922853
(43) Veröffentlichungstag der Anmeldung: 22.11.2000
(73) Patentinhaber: ALCATEL, 75008 Paris (FR)
(72) Erfinder: Nusch, Dietmar, 70376 Stuttgart (DE)
(74) Vertreter: Urlichs, Stefan, Dipl.-Phys.

(56) Entgegenhaltungen:
- WO-A-97/00567
- GB-A- 2 330 221
- MIN-JEONG KIM ET AL: "Indexing techniques for MIB considering the CMIS operations" GLOBAL TELECOMMUNICATIONS CONFERENCE, 1996. GLOBECOM '96. 'COMMUNICATIONS: THE KEY TO GLOBAL PROSPERITY LONDON, UK 18-22 NOV. 1996, NEW YORK, NY, USA,IEEE, US, 18. November 1996 (1996-11-18), Seiten 1862-1866, XP010220201 ISBN: 0-7803-3336-5

## Beschreibung

Die Erfindung betrifft ein Verfahren zum Ausführen einer Anforderung einer Netzwerkverwaltungseinrichtung an ein Netzelement eines Nachrichtennetzes zum Zweck des Netzwerkmanagements nach dem Oberbegriff des Anspruchs 1 und ein Netzelement nach dem Oberbegriff des Anspruchs 4.

Nachrichtennetze wie synchrone digitale Übertragungsnetze oder Telekommunikationsnetze werden nach dem als OSI Systems Management bezeichneten Standard der International Organization for Standardization (ISO) verwaltet. Die prinzipielle Architektur eines Netzwerkmanagementsystems basiert auf einer Client-Server-Architektur, wobei der Server als Agent und der Client als verwalteter Prozeß bezeichnet wird.

Ein Nachrichtennetz besteht aus Netzelementen, die untereinander verbunden sind. Jedes Netzelement besitzt eine als Agent bezeichnete Steuerungseinrichtung, die die lokalen Ressourcen des Netzelementes verwaltet und einer übergeordneten zentralen Netzwerkverwaltungseinrichtung untersteht. Für ihre Verwaltungsaufgaben unterhält die Steuerungseinrichtung eines Netzelementes eine als Management Information Base (MIB) bezeichnete Datenbank, in der die physikalischen und logischen Ressourcen des Netzelementes als verwaltete Objekte (managed objects, MO) abgebildet sind. Alle in der MIB aktuell enthaltenen verwalteten Objekte sind mit einem eindeutigen Namen in einem Namensbaum vermerkt und dort nach ihrer Objektklassenzugehörigkeit angeordnet.

Die Verwaltung des Netzwerks, oft auch als Netzwerkmanagement bezeichnet, wird von der zentralen Netzwerkverwaltungseinrichtung durchgeführt indem Anforderungen - sogenannte Requests - an die Steuerungseinrichtungen der Netzelemente gesendet werden. Dazu wird ein eigenes Netzwerkmanagementprotokoll verwendet, das in der Empfehlung der ITU-T X.710 festgelegt ist.

Mit Hilfe dieser Requests können Dateninhalte der MIB jedes Netzelementes abgefragt und aktualisiert werden, wodurch Funktionen wie Netzüberwachung und Netzkonfiguration durchgeführt werden. Solche Requests zielen darauf ab, einzelne verwaltete Objekte bzw. deren Parameter abzufragen oder zu verändern. Dazu enthält in der Regel jeder Request einen Filter, der das oder die verwalteten Objekte bestimmt, auf die die Anforderung anzuwenden ist. Zusätzlich wird in jedem Request der sogenannte Scope angegeben, das ist der Bereich oder der Ast des Namensbaums, in dem die fraglichen verwalteten Objekte angeordnet sind. Der Scope bezieht sich also auf den festen Platz eines gewünschten verwalteten Objektes im Namensbaum, während der Filter verwaltete Objekte anhand ihrer Attribute auswählt.

Da der Arbeitsspeicher in den Netzelementen begrenzt ist und aufgrund der großen Anzahl verwalteter Objekte werden diese in eine Datenbank auf eine Festplatte geschrieben, die oft auch als Persistency-Datenbank bezeichnet wird. Um nun einen Request ausführen und auf ein verwaltetes Objekt anwenden zu können, müssen alle verwalteten Objekte, die in den angegebenen Scope fallen von der Datenbank in den Arbeitsspeicher geladen und mit den im Filter angegebenen Parametern verglichen werden. Dabei ist das Laden der verwalteten Objekte im Vergleich zur eigentlichen Auswertung des Filters ein sehr zeitaufwendiger Vorgang.

Die WO 97/00567 beschreibt ein System mit mehreren verwaltenden Systemen, die eine Anzahl verwalteter Systeme steuert. Die verwalteten Systeme enthalten eine Anzahl verwalteter Objekte eines oder mehrerer unterschiedlicher Typen, welche Ressourcen repräsentieren. Die verwalteter Objekte sind in einer hierarchischen Baumstruktur eines Namensbaums angeordnet. In dem verwalteten System sind Typdaten von verwalteten Objekten gespeichert und verschiedene Algorithmen finden Verwendung um Informationen über die Abbildung zwischen verwalteten Objekten und den Resourcen und/oder Informationen über Teilbäume des Namensbaums bereitzustellen.

Es ist demnach eine Aufgabe der Erfindung, ein Verfahren zum Ausführen einer Anforderung anzugeben, das schneller arbeitet als bisher. Eine weitere Aufgabe der Erfindung besteht darin, ein Netzelement anzugeben, mit dem das Verfahren durchgeführt werden kann.

Die Aufgabe wird hinsichtlich des Verfahrens gelöst durch die Merkmale des Anspruchs 1 und hinsichtlich des Netzelementes durch die Merkmale des Anspruchs 4. Vorteilhafte Ausgestaltungen sind den abhängigen Ansprüchen zu entnehmen.

Die Erfindung führt besonders bei Netzelementen, in denen eine große Zahl verwalteter Objekte benötigt wird und daher viele verwaltete Objekte nicht direkt im Arbeitsspeicher verfügbar sondern auf die Festplatte ausgelagert sind, zu einer erheblichen Zeitersparnis bei der Bearbeitung von Requests. Daher kann die Erfindung vorteilhaft in Netzelementen für digitale synchrone Übertragungsnetze wie SDH- oder SONET-Netzen eingesetzt werden, z.B. in digitalen Crossconnetcs und in Add/Drop-Multiplexern.

Vorteilhaft kann die Erfindung als Computerprogramm ausgeführt werden, das die Schritte des erfindungsgemäßen Verfahrens ausführt, wenn es auf einem Computer abläuft.

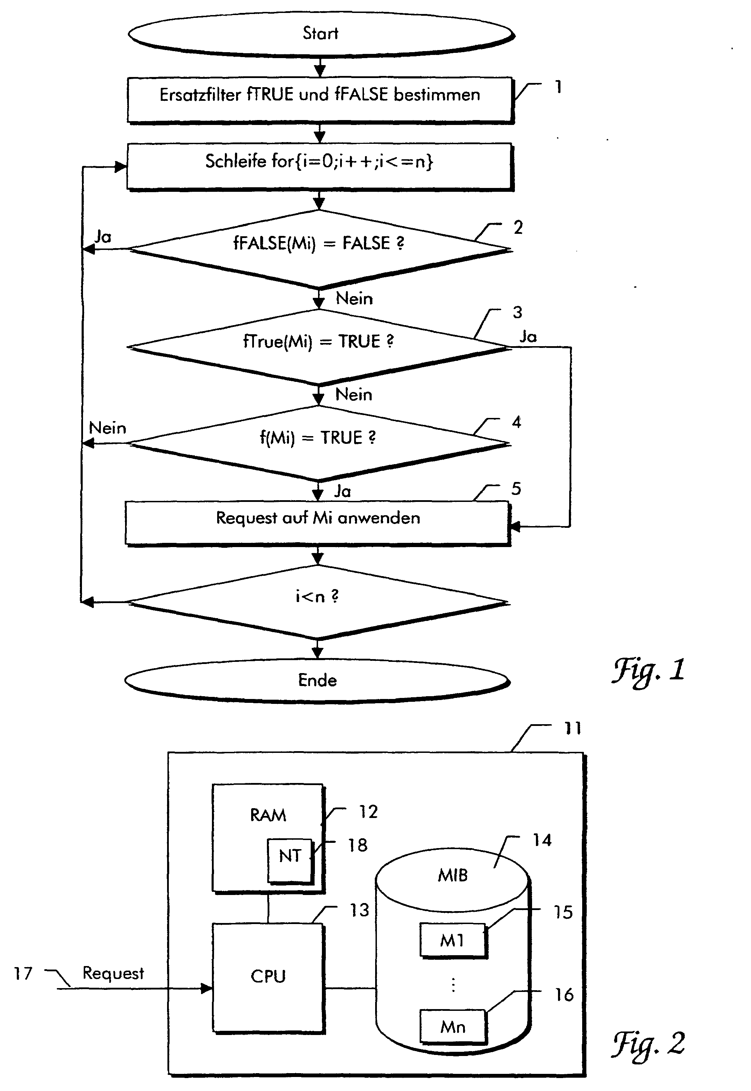

Im folgenden wird die Erfindung anhand der Figuren 1 und 2 in einem Ausführungsbeispiel erläutert. Es zeigt:
Figur 1:ein Flußdiagramm des erfindungsgemäßen Verfahrens und
Figur 2: ein Blockschaltbild einer Steuerungseinrichtung eines Netzelementes.

Für die Requests wird ein Protokoll mit der Bezeichnung CMIP (common management information protocol) verwendet. Mit einem solchen Request wird bezweckt, eines oder mehrere verwaltete Objekte eines Netzelementes oder einer logischen Schicht in der Verwaltungshierarchie, an die der Request geschickt wurde, abzufragen oder zu aktualisieren. Dazu sind die betreffenden verwalteten Objekte durch Scope und Filter bestimmt. Der Filter wird als CMISE Filter (CMISE: common management information service element) bezeichnet und enthält Boolsche Bedingungen, die auf im Filter angegebene Attribute eines verwalteten Objektes anzuwenden sind.

Durch Auswertung des Filters müssen also zunächst alle angesprochenen verwalteten Objekte ausgewählt werden, indem die Boolschen Bedingungen auf alle verwalteten Objekte im angegebenen Scope angewendet werden. Da in einem Netzelement eine große Anzahl von verwalteten Objekte (Größenordnung mehrere Tausend) gespeichert sind, hat die Effizienz der Filterung einen signifikanten Einfluß auf die Verarbeitungszeit eines Requests. Ein Filter kann jedoch nur auf ein verwaltetes Objekt angewendet werden, wenn dieses in den Arbeitsspeicher geladen ist. Durch die Erfindung wird nun vermieden, daß zumindest einige verwaltete Objekte, die auf die Festplatte ausgelagert aber vom Request nicht betroffen sind, in den Arbeitsspeicher geladen werden müssen.

Die Erfindung basiert auf der Erkenntnis, daß obwohl ein verwaltetes Objekt selbst auf die Festplatte ausgelagert sein kann, gewisse Informationen über dieses verwaltete Objekt trotzdem ständig im Arbeitsspeicher vorhanden sind. Ein Grundgedanke der Erfindung besteht daher darin, das Ergebnis der Anwendung des Filters eines Requests auf ein verwaltetes Objekt anhand solcher zusätzlicher, ständig im Arbeitsspeicher befindlicher Informationen vorherzusagen, ohne das Objekt dazu in den Arbeitsspeicher laden und mit dem Filter vergleichen zu müssen.

Eine bevorzugte Quelle solcher ständig im Arbeitsspeicher verfügbarer Informationen ist der Namensbaum (naming tree), in dem alle vorhandenen verwalteten Objekte mit ihrem eindeutigen Namen verzeichnet sind. Objektattribute, die aus dem Namensbaum abgeleitet werden können, ohne auf das betreffende Objekt selbst zugreifen zu müssen, sind der Objektname *objectName* und die Objektklasse *objectClass.* Gerade diese Attribute werden häufig in CMISE Filtern verwendet.

Wenn in einem CMISE Filter die Attribute objectcloss und id abgefragt werden, so sind die folgenden beiden Filterausdrücke möglich (die abgefragten Werte sind beispielhaft genannt). Dabei ist das Attribut objectclass ein aus dem Namensbaum verfügbares Attribut, während das Attribut id nur durch direkten Zugriff auf das verwaltete Objekt erhältlich ist.
1. (*objectClass* == *OID*_*Fabric* && *id* == 5); dieser Filter wird unabhängig vom Wert des Attributes id nie zutreffen, wenn das Attribut *objectClass* nicht den Wert *OID*_*Fabric* hat.
2. *(objectClass* == *OID_ Fabric∥ id* == 5); dieser Filter wird unabhängig vom Wert des Attributes *id* immer zutreffen, wenn das Attribut *objectClass* den Wert OID_Fabric hat.

Ein weiterer Grundgedanke der Erfindung besteht nun darin, aus dem CMISE Filter eines Requests zunächst optimierte Filter als Ersatzfilter zu bestimmen, wobei die optimierten Filter nur Attribute enthalten, die aus den ständig im Arbeitsspeicher verfügbaren Informationen abgeleitet werden können.

Ein bevorzugter Weg für die Konstruktion solcher Ersatzfilter besteht darin, aus einem CMISE Filter *f* zwei Ersatzfilter *fTRUE* und *fFALSE* zu bestimmen, die den folgenden drei Bedingungen genügen:
1. *fTRUE* und *fFALSE* nutzen nur Attribute, die aus den ständig im Arbeitsspeicher verfügbaren Informationen abgeleitet werden können;
2. wenn *fTRUE* auf ein verwaltetes Objekt zutrifft, dann trifft *f* ebenfalls auf das verwaltete Objekt zu und
3. wenn *fFALSE* auf ein verwaltetes Objekt nicht zutrifft, dann trifft *f* auf das verwaltete Objekt ebenfalls nicht zu.

Bevor ein Beispiel für die Konstruktion von Ersatzfiltem angegeben wird, wird zunächst auf die für CMISE Filter verwendete Syntax und Notation gemäß ANS.1 (abstract syntax notation one) eingegangen. Die ASN.1 Definition von CMISE Filtern lautet wie folgt:

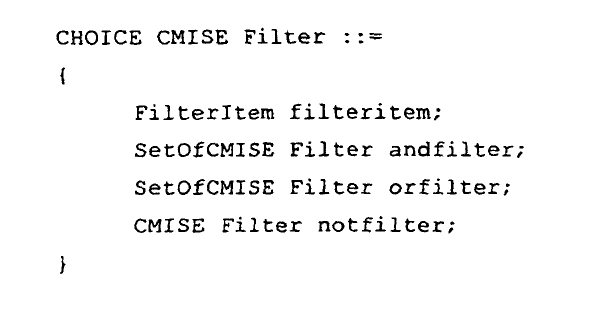

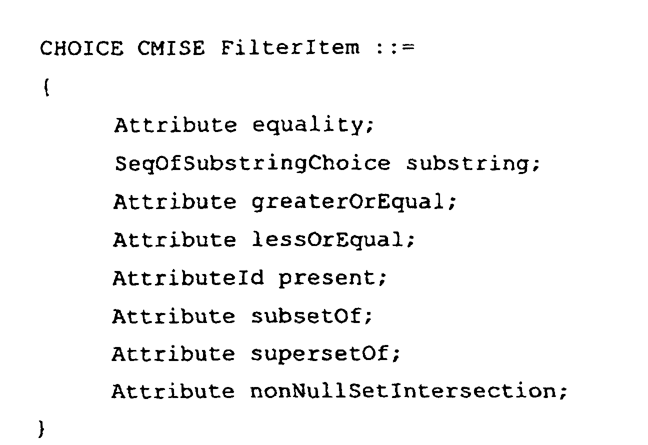

Der Abschnitt Filterltem enthält "einfache" Bedingungen für Attribute des CMISE Filters. Ein solcher CMISE Filter ist entweder
- eine einzige, "einfache" Bedingung,
- eine Konjunktion von CMISE Filtern (andFilters),
- eine Disjunktion von CMISE Filtern (orFilters) oder
- eine Negation eines CMISE Filters (notFilter).

Die Ausdrücke andFilter, orFilter und notFilter können selbst wieder aus mehreren CMISE Filtern jeder Art bestehen.

Zur Vereinfachung der Notation wird im folgenden Beispiel für die Konstruktion von Ersatzfiltern von folgenden Annahmen ausgegangen: Sei a eine Filterbedingung für ein Attribut eines verwalteten Objektes, das nur durch Zugriff auf das jeweilige Objekt erhältlich ist; sei x eine Filterbedingung für ein Attribut eines verwalteten Objektes, das aus dem Namensbaum ableitbar ist; sei A ein beliebiger CMISE Filter und sei f(x, a1,... , an) ein CMISE Filter, der von den Filterbedingungen x, a1,... , an abhängt.

Der Ersatzfilter *fTRUE* für den CMISE Filter *f* wird nach folgenden Regeln bestimmt:
- Wenn *f* aus nur einer Filterbedingung besteht:
   *fTRUE*( present(a)) = FALSE
   *fTRUE*(present(x)) = FALSE
   *fTRUE*(a) = FALSE
   *fTRUE*(x) = x
- Wenn *f* aus der Negation nur einer Filterbedingung besteht:
   *fTRUE*(NOT( present(a))) = FALSE
   *fTRUE*(NOT(present(x))) = FALSE
   *fTRUE*(NOT(a)) = FALSE
   *fTRUE*(NOT(x)) = NOT(x)
- Wenn *f* eine Konjunktion einzelner Filterbedingungen ist:
   *fTRUE*(AND(A1, ..., An) ) = AND(*fTRUE*(A1)*,*..., *fTRUE*(An))
   Wenn *f* eine Disjunktion einzelner Filterbedingungen ist:
   *fTRUE*(OR(A1, ..., An)) = OR(*fTRUE*(A1), ..., *fTRUE*(An))
- Wenn *f* die Negation beliebiger CMISE Filter ist:
   *fTRUE*(NOT(AND(A1, ..., An))) = *fTRUE*(OR( NOT(A1), ..., NOT(An))
   *fTRUE*( NOT( OR(A1, ..., An))) = fTRUE( AND( NOT(A1), ..., NOT(An))
   *fTRUE*(NOT(NOT(A))) = *fTRUE*(A)

Der Ersatzfilter *fFALSE* für den CMISE Filter *f* wird nach folgenden Regeln bestimmt:
- Wenn *f* aus nur einer Filterbedingung besteht:
   *fFALSE*(present(a)) = TRUE
   *fFALSE*(present(x)) = TRUE
   *fFALSE*(a) = TRUE
   *fFALSE*(x) *=* x
- Wenn *f* aus der Negation nur einer Filterbedingung besteht:
   *fFALSE*(NOT( present(a))) = TRUE
   *fFALSE*(NOT( present(x))) = TRUE
   *fFALSE*(NOT(a)) = TRUE
   *fFALSE*(NOT(x)) = NOT(x)
- Wenn *f* eine Konjunktion einzelner Filterbedingungen ist:
   *fFALSE*(AND(A1, ..., An)) = AND(*fFALSE*(A1), ..., *fFALSE*(An))
- Wenn *f* eine Disjunktion einzelner Filterbedingungen ist:
   *fFALSE*(OR(A1, ..., An)) = *OR*(*fFALSE*(A1), ..., *fFALSE*(An))
- Wenn *f* die Negation beliebiger CMISE Filter ist:
   *fFALSE*(NOT( AND(A1, ..., An))) = *fFALSE*(OR( NOT(A1), ..., NOT(An))
   *fFALSE*(NOT(OR(A1 , ..., An))) = *fFALSE*(AND(NOT(A1), ..., NOT(An))
   *fFALSE*(NOT(NOT(A))) = *fFALSE*(A)

Der Ausdruck *"AttributelD present"* nimmt eine Sonderrolle ein. Er testet, ob das verwaltete Objekt ein Attribut, das durch seine AttributelD gekennzeichnet ist, überhaupt enthält. Der Wert des Attributes ist dabei unerheblich. Die Entscheidung läßt sich nicht an der Klasse des Objekts festmachen, weil bestimmte Attribute optional sein können. Daher muß jeweils auf das konkrete Objekt zugegriffen werden, d.h. alle Attribute des Objektes werden geladen und es wird geprüft, ob das fragliche Attribut dabei ist. Somit müssen die Konstruktionsregeln für die Ersatzfilter *fTRUE* und *fFALSE* so angepasst werden, daß bei *filterltem == present* keine Aussage nur aufgrund der im Arbeitsspeicher verfügbaren Attribute möglich ist.

Die Anforderung, die den CMISE Filter f enthält, wird nun entsprechend dem erfindungsgemäßen Verfahren wie in Figur 1 dargestellt ausgeführt. Sei hierfür *s* der im Request angegebene Scope; sei {*M1*, *..., Mn}* der Satz von verwalteten Objekten im angegebenen Scope s; sei {x1, ..., xm} ein Satz von Attributen, die für jedes verwaltete Objekt aus den im Arbeitsspeicher ständig vorhandenen Informationen abgeleitet werden können, ohne die betreffenden Objekte selbst in den Arbeitsspeicher laden zu müssen.
- Schritt 1:: Bestimmen der Ersatzfilter *fTRUE* und *fFALSE* aus *f* nach den vorstehend genannten Regeln.
Für jedes verwaltete Objekt *Mi* aus dem Satz {*l*, .... *Mn*} werden die Schritte 2 bis 5 ausgeführt (Schleife for(i=0; i++, i<=n)).
- Schritt 2:: Wenn *fFALSE* auf *Mi* nicht zutrifft (Ergebnis FALSE), fahre mit dem nächsten verwalteten Objekt *Mi*+ 1 fort.
- Schritt 3:: Wenn *fTRUE* auf *Mi* zutrifft (Ergebnis TRUE), dann lade Mi in den Arbeitsspeicher und wende die Anforderung auf *Mi* an (Schritt 5).
- Schritt 4:: Lade nun das verwaltete Objekt *Mi* in den Arbeitsspeicher und wende *f* auf *Mi* an. Wenn *f* auf *Mi* zutrifft, fahre mit Schritt 5 fort, anderenfalls beginne ab Schritt 2 mit dem nächsten verwalteten Objekt *Mi*+ *1*.
- Schritt 5:: Wende den Request auf *Mi* an.

Im folgenden ist ein einfaches Beispiel für einen CMISE Filter, die Konstruktion der Ersatzfilter *fTRUE* und *fFALSE* und die Überprüfung des Ergebnisses angegeben:

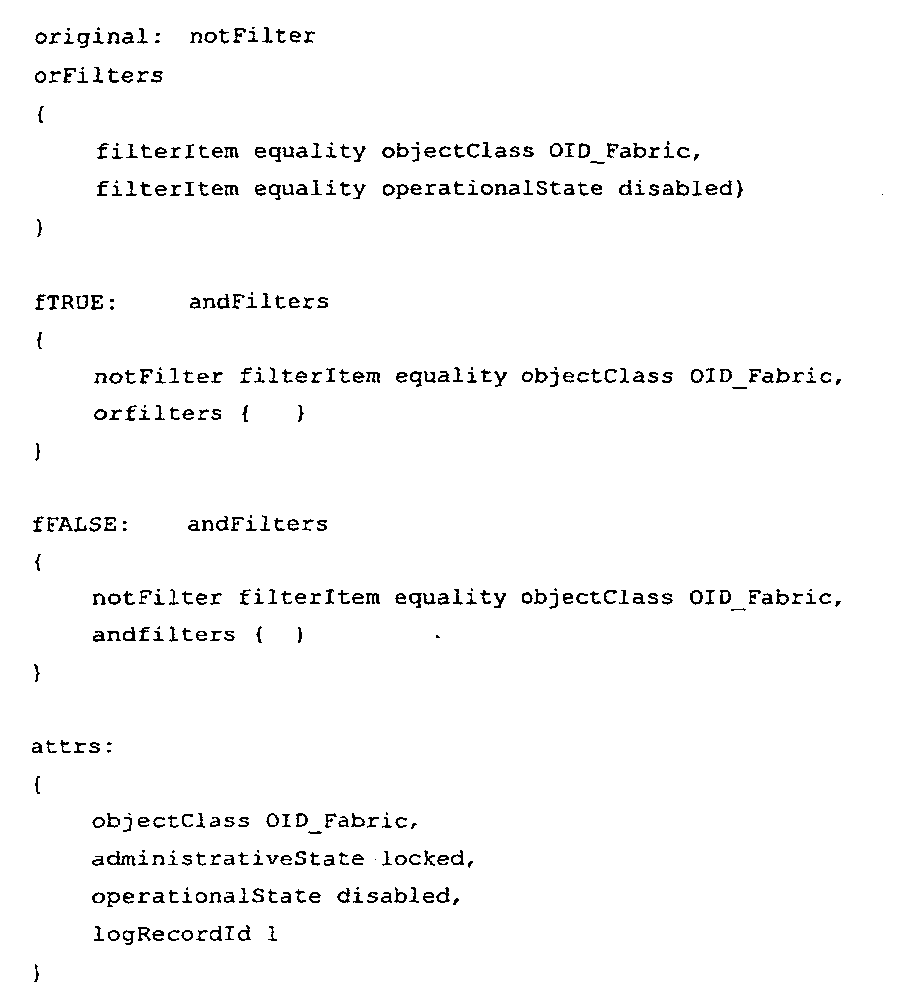

Bei der Anwendung auf ein verwaltetes Objekt liefert f als Ergebnis 0 (FALSE); *fTRUE* liefert ebenfalls 0 und *fFalse* liefert 0. Die an die Konstruktion der Ersatzfilter gestellten Bedingungen sind also erfüllt: *fTRUE* ist nicht erfüllt und läßt daher keine Aussage über *f* zu. *fFALSE* nicht erfüllt, daher ist *f* ebenfalls nicht erfüllt.

In Figur 2 ist die Steuerungseinrichtung 1 1 eines Netzelementes dargestellt. Sie enthält einen Prozessor CPU 13, einen Arbeitsspeicher RAM 12 und eine auf einer Festplatte gespeicherte Datenbank MIB 14. In der Datenbank sind die verwalteten Objekte M1, ..., Mn 15, 16 gespeichert. Die Steuerungseinrichtung empfängt einen Request 17, der einen Filter enthält, in dem anhand ihrer Attribute die verwalteten Objekte angegeben sind, auf die der Request angewendet werden soll. Der Prozessor CPU 13 ist sowohl für die Auswertung des Filters als auch für die anschließende Anwendung des Requests auf die anhand des Filters ausgewählten verwalteten Objekte zuständig.

Dazu bestimmt der Prozessor CPU 13 zunächst aus dem Filter zumindest einen optimierten Ersatzfilter, der auf zusätzliche, ständig im Arbeitsspeicher RAM 12 vorhandene Informationen NT 18 über die in der Datenbank 14 gespeicherten verwalteten Objekte M1, ..., Mn 15, 16 angewendet wird und nur Attribute enthält, die aus den zusätzlichen Informationen NT 18 ableitbar sind. Bei den zusätzlichen Informationen kann es sich z.B. um den Namensbaum NT handeln.

Die CPU 13 ist zuständig, den Ersatzfilter auf die zusätzlichen Informationen NT 18 anzuwenden, erforderlichenfalls, d.h. falls die Auswertung des Ersatzfilters für einige verwaltete Objekte keine eindeutige Auswahl oder Nichtauswahl ergibt, für die weitere Auswertung des Originalfilters solche verwalteten Objekte in den Arbeitsspeicher 12 zu laden, die ausgewählten verwalteten Objekte in den Arbeitsspeicher 12 zu laden und die Anforderung 17 auf die ausgewählten verwalteten Objekte anzuwenden. Nach erfolgter Ausführung sendet die CPU eine Antwort an die Netzwerkverwaltungseinrichtung, die den Request gesendet hatte, zurück. Die Antwort kann eine Bestätigung der erfolgreichen Ausführung des Requests, eine Fehlermeldung oder das Ergebnis des Requests sein.

Die Implementierung des erfindungsgemößen Verfahrens kann durch ein Computerprogramm ausgeführt werden, das auf einem Speichermedium gespeichert ist. Das Computerprogramm enthält ein Programmcodemittel, das z.B. als Sequenz aus einzelnen Steuerbefehlen für einen Computer ausgeführt ist. Alle Funktionen bei der Auswertung eines CMISE Filters werden dabei von dem Computerprogramm, z.B. einer Programfunktion der Klasse FilterMgr, ausgeführt. Für jeden Request wird ein solches Computerprogramm gestartet, das dann für die Auswertung des Filters verantwortlich ist. Ein Ausführungsbeispiel für ein solches Computerprogramm ist im folgenden als Programmcode in einer Programmiersprache gegeben:

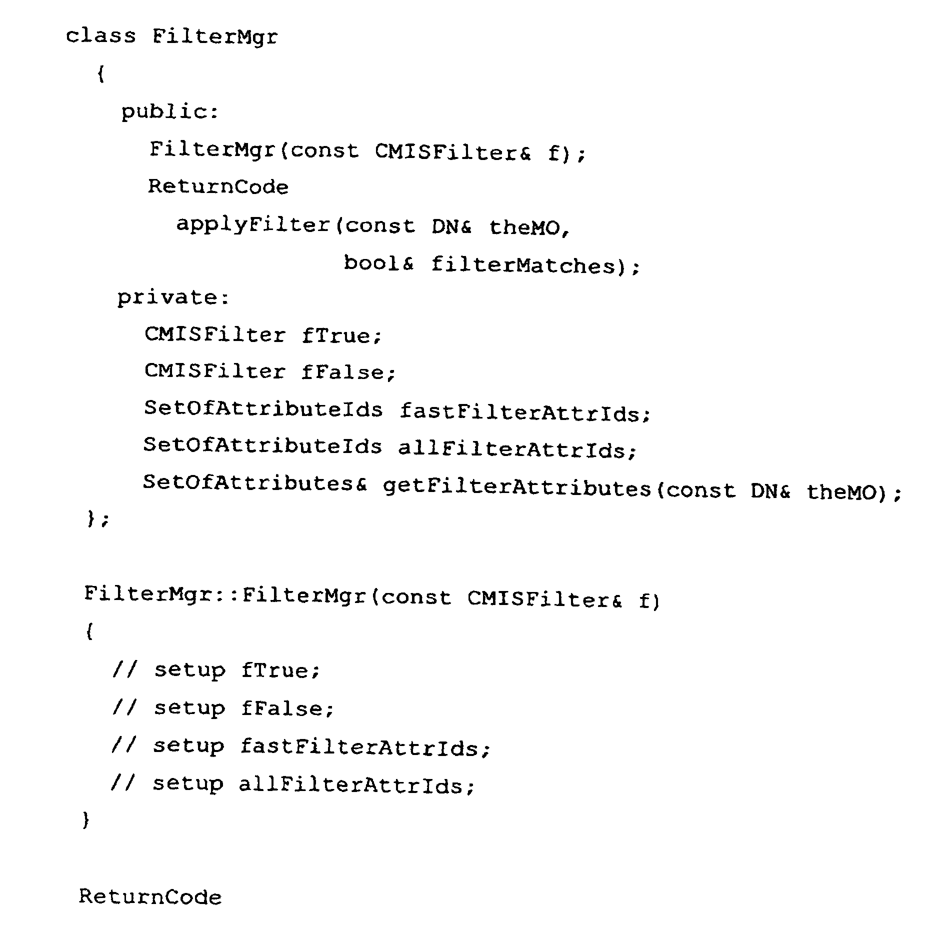

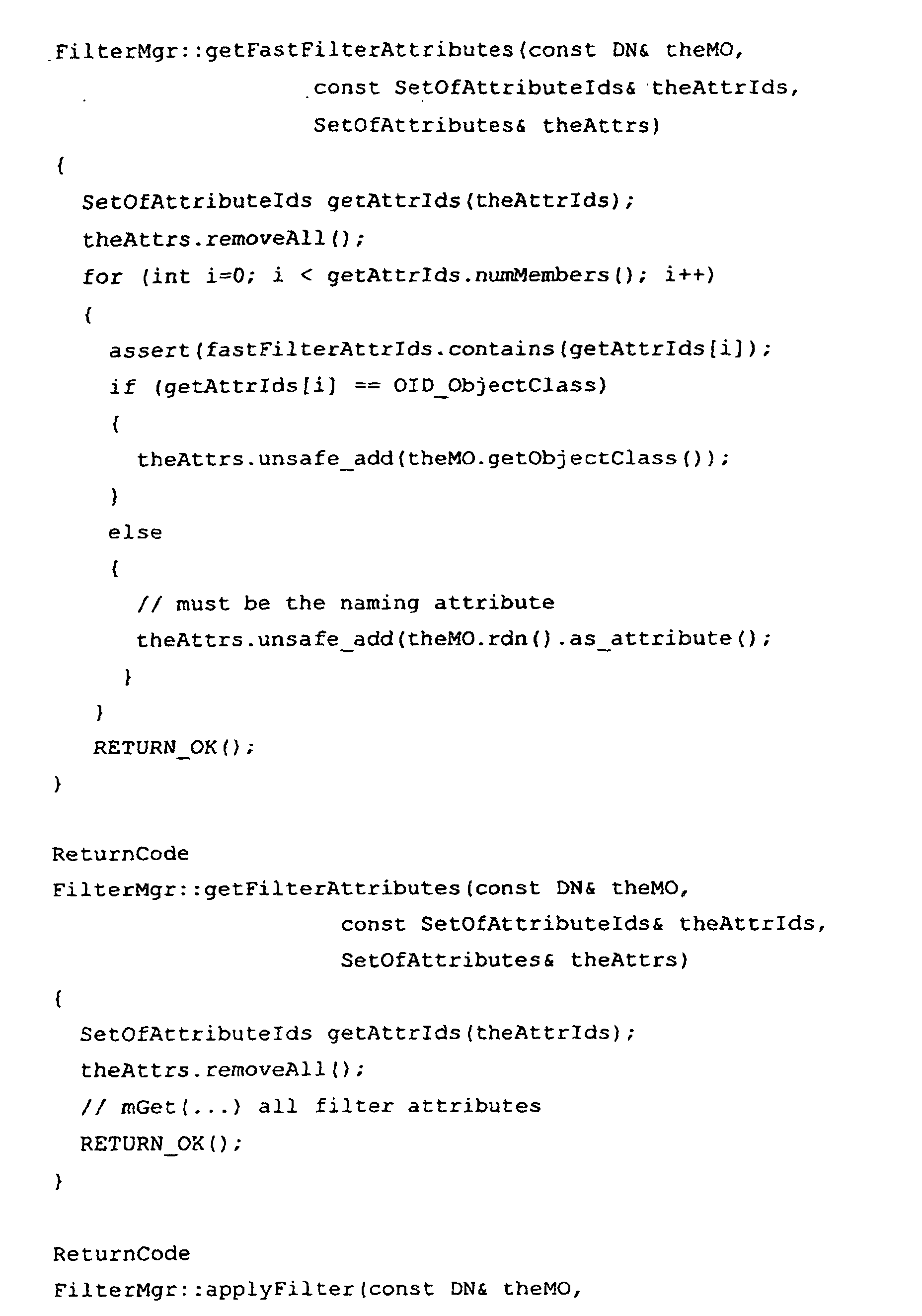

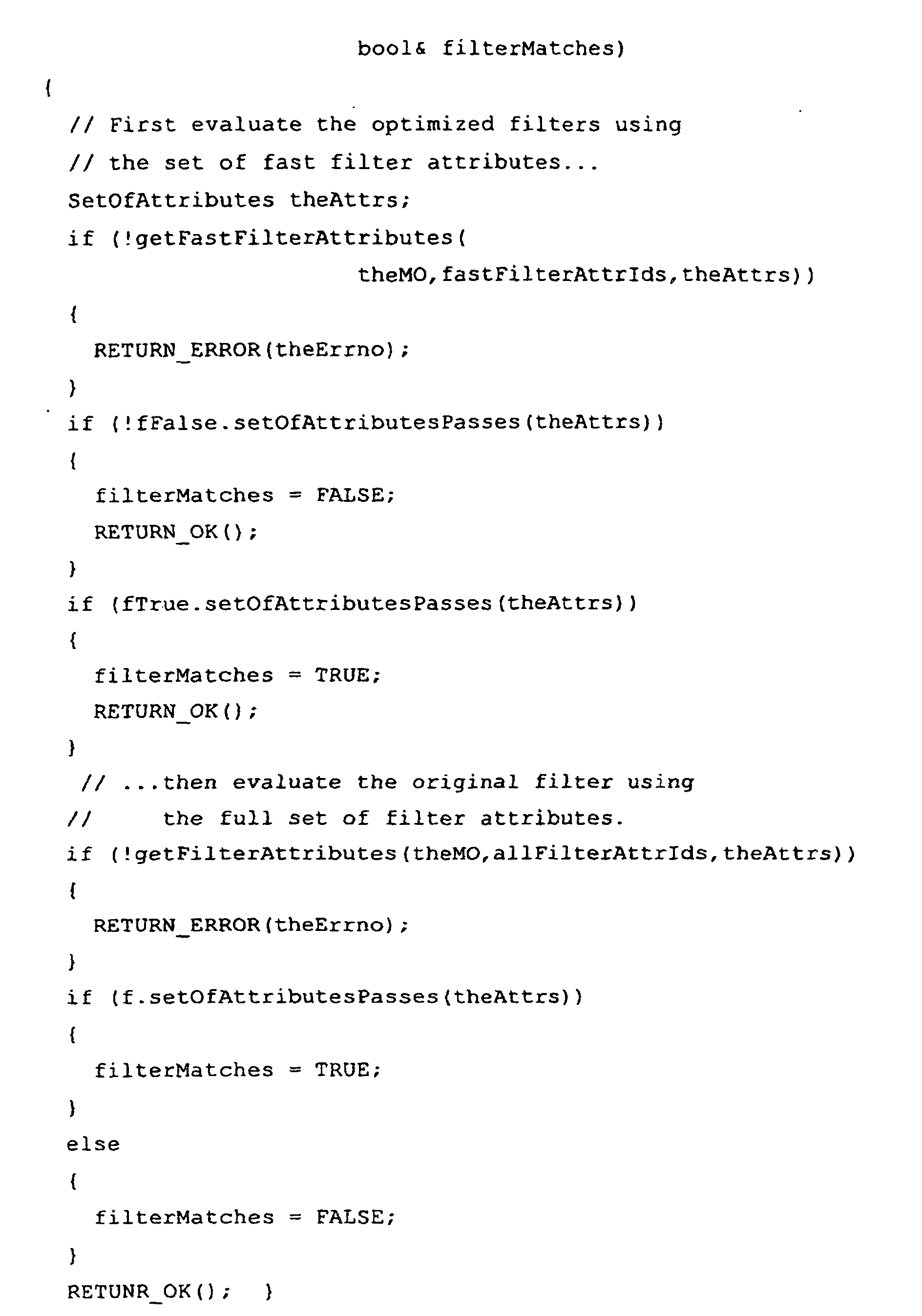

## Patentansprüche

1. Verfahren zum Ausführen einer Anforderung (17) einer Netzwerkverwaltungseinrichtung an ein Netzelement eines Nachrichtennetzes, wobei in dem Netzelement physikalische und logische Ressourcen als in einem Informationsmodell vordefinierte verwaltete Objekte (15, 16) abgebildet sind und die verwalteten Objekte in einer Datenbank (14) des Netzelementes gespeichert sind, wobei die Anforderung (17) einen Filter enthält, der das oder die verwalteten Objekte bestimmt, auf welche die Anforderung anzuwenden ist, und wobei zur Ausführung (5) der Anforderung (17) die durch den Filter bestimmten verwalteten Objekte in einen Arbeitsspeicher des Netzelementes geladen werden,
**dadurch gekennzeichnet, daß**
zur Auswahl der durch den Filter bestimmten verwalteten Objekte zumindest ein optimierter Filter ermittelt wird (1), der auf zusätzliche, ständig im Arbeitsspeicher (12) vorhandene Informationen (18) über die in der Datenbank (14) gespeicherten verwalteten Objekte (15, 16) angewendet wird und nur Attribute enthält, die aus den zusätzlichen Informationen (18) ableitbar sind.

2. Verfahren nach Anspruch 1, bei dem die zusätzlichen Informationen (18) einen Namensbaum umfassen, in dem alle in der Datenbank (14) gespeicherten verwalteten Objekte (15, 16) mit einem eindeutigen Namen vermerkt und nach ihrer Objektklassenzugehörigkeit angeordnet sind.

3. Verfahren nach Anspruch 1, bei dem aus dem ursprünglichen Filter *f* ein erster optimierter Filter *fTRUE* und ein zweiter optimierter Filter *fFALSE* ermittelt werden, die folgenden Bedingungen genügen:
- wenn *fTRUE* auf ein verwaltetes Objekt zutrifft, dann trifft auch *f* auf dieses verwaltete Objekt zu und
- wenn *fFALSE* auf ein verwaltetes Objekt nicht zutrifft, dann trifft auch *f* auf dieses verwaltete Objekt nicht zu.

4. Netzelement mit einer Steuerungseinrichtung (11) zum Ausführen einer Anforderung einer Netzwerkverwaltungseinrichtung, mit einer Datenbank (14) zum Speichern von verwalteten Objekten (15, 16), die in einem Informationsmodell vordefinierte Abbildungen von physikalischen und logischen Ressourcen des Netzelementes sind, und mit einem Arbeitsspeicher (RAM) zum Laden derjenigen verwalteten Objekte, die von der Steuerungseinrichtung anhand eines in der Anforderung enthaltenen Filters ausgewählt werden, der die verwalteten Objekte angibt, auf welche die Anforderung anzuwenden ist,
**dadurch gekennzeichnet, daß**
die Steuerungseinrichtung (11) vorgesehen ist zur Ermittlung von zumindest einem optimierten Filter aus dem in der Anforderung enthaltenen Filter, wobei der optimierte Filter auf zusätzliche, ständig im Arbeitsspeicher (12) vorhandene Informationen (18) über die in der Datenbank (14) gespeicherten verwalteten Objekte (15, 16) angewendet wird und nur Attribute enthält, die aus den zusätzlichen Informationen (18) ableitbar sind.

5. Computerprogramm, das ausgebildet ist, die Schritte des Verfahrens nach Anspruch 1 auszuführen, wenn das Programm auf einem Computer abläuft.

6. Computerlesbares Speichermedium mit einem darauf abgespeicherten Computerprogramm, das ausgebildet ist die Schritte des Verfahrens nach Anspruch 1 auszuführen, wenn das Programm auf einem Computer abläuft.

## Claims

1. Method for executing a request (17) from a network administration device to a network element of a message network, wherein in the network element physical and logical resources are imaged as managed objects (15, 16) pre-defined in an information model and the managed objects are stored in a database (14) of the network element, wherein the request (17) contains a filter which determines the managed object(s) to which the request is to be applied and wherein for executing (5) the request (17) the managed objects determined by the filter are loaded into a main memory of the network element,
**characterised in that**
for selecting the managed objects determined by the filter at least one optimised filter is detected (1), which is applied to additional information (18), permanently present in the main memory (12), about the managed objects (15, 16) stored in the database (14) and contains only attributes which can be derived from the additional information (18).

2. Method according to claim 1, in which the additional information (18) comprises a naming tree in which all the managed objects (15, 16) stored in the database (14) are noted with a unique name and arranged according to the object class to which they belong.

3. Method according to claim 1, in which from the original filter *f* a first optimised filter *fTRUE* and a second optimised filter *fFALSE* are detected, which satisfy the following conditions:
- if *fTRUE* applies to a managed object, then *f* also applies to this managed object and
- if *fFALSE* does not apply to a managed object, then *f* does not agree with this managed object either.

4. Network element with a control device (11) for executing a request from a network administration device, with a database (14) for storing managed objects (15, 16) which are images of physical and logical resources of the network element pre-defined in an information model, and with a main memory (RAM) for loading those managed objects which are selected by the control device using a filter contained in the request, which cites the managed objects to which the request is to be applied,
**characterised in that**
the control device (11) is provided for detecting at least one optimised filter from the filter contained in the request, wherein the optimised filter is applied to additional information (18), permanently present in the main memory (12), about the managed objects (15, 16) stored in the database (14) and contains only attributes which can be derived from the additional information (18).

5. Computer program which is constructed to execute the steps of the method according to claim 1 when the program is running on a computer.

6. Computer-readable storage medium with a computer program stored thereon which is constructed to execute the steps of the method according to claim 1 when the program is running on a computer.

## Revendications

1. Procédé pour traiter une demande (17) d'un appareil de gestion de réseau destiné à un élément de réseau d'un réseau de communication, des ressources physiques et logiques étant reproduites dans l'élément de réseau sous la forme d'objets (15, 16) gérés et prédéfinis dans un modèle d'information et les objets gérés étant stockés dans une banque de données (14) de l'élément de filtre, la demande (17) contenant un filtre qui détermine le ou les objet(s) géré(s) par lesquels la demande doit être appliquée, et les objets gérés et définis par le filtre étant chargés dans une mémoire de travail de l'élément de réseau pour le traitement (5) de la demande (17), **caractérisé en ce que**, pour le choix des objets gérés et définis par le filtre, on détermine au moins un filtre optimisé (1), qui est utilisé pour des informations (18) supplémentaires et constamment présentes dans la mémoire de travail (12) sur les objets (15, 16) gérés et stockés dans la banque de données et qui contient seulement des attributs qui peuvent être déduits des informations (18) supplémentaires.

2. Procédé selon la revendication 1, dans lequel les informations (18) supplémentaires comprennent un arbre de nom, dans lequel tous les objets (15, 16) gérés et stockés dans la banque de données (14) sont mentionnés avec un nom défini et sont disposés selon leur appartenance à des classes d'objet.

3. Procédé selon la revendication 1, dans lequel on détermine à partir du filtre f initial un premier filtre fTRUE optimisé et un second filtre fFALSE optimisé, qui répondent aux conditions suivantes :
- si fTRUE est valable pour un objet géré, f est valable également pour cet objet géré et
- si fFALSE n'est pas valable pour un objet géré, alors également f n'est pas valable pour cet objet géré.

4. Elément de réseau avec un appareil de commande (11) pour traiter une demande d'un appareil de gestion de réseau, avec une banque de données (14) pour le stockage d'objets (15, 16) gérés, qui sont des représentations, prédéfinies dans un modèle d'information, de ressources physiques et logiques de l'élément de réseau, et avec une mémoire de travail (RAM) pour le chargement des objets gérés qui sont sélectionnés par l'appareil de commande à l'aide d'un filtre contenu dans la demande, lequel filtre indique les objets gérés pour lesquels la demande doit être appliquée, **caractérisé en ce que** ce que l'appareil de commande (11) est prévu pour la détermination d'au moins un filtre optimisé à partir du filtre inclus dans la demande, le filtre optimisé étant utilisé pour des informations (18) supplémentaires et constamment présentes dans la mémoire de travail (12) sur les objets (15, 16) gérés et stockés dans la banque de données (14) et contenant seulement des attributs qui peuvent être déduits des informations (18) supplémentaires.

5. Programme informatique qui est réalisé pour exécuter les étapes du procédé selon la revendication 1 lorsque le programme se déroule sur un ordinateur.

6. Support de stockage pouvant être lu par un ordinateur avec un programme informatique stocké dessus, qui est conçu pour exécuter les étapes du procédé selon la revendication 1 lorsque le programme se déroule sur un ordinateur.
